# EUROPÄISCHE PATENTSCHRIFT

(11) **EP 2 222 562 B1**
(45) Veröffentlichungstag und Bekanntmachung des Hinweises auf die Patenterteilung: **22.08.2012**
(21) Anmeldenummer: 08866046.9
(22) Anmeldetag: 24.11.2008
(51) Int. Cl.: B64D 41/00, B64D 27/24, H01M 8/24

(54) **BRENNSTOFFZELLENSYSTEMMODUL**
FUEL CELL SYSTEM MODULE
MODULE DE SYSTEME DE PILE A COMBUSTIBLE

(30) Priorität: 21.12.2007 DE 102007061991; 21.12.2007 US 15851
(43) Veröffentlichungstag der Anmeldung: 01.09.2010
(73) Patentinhaber: Airbus Operations GmbH, 21129 Hamburg (DE)
(72) Erfinder: WESTENBERGER, Andreas, 21614 Buxtehude (DE); THOMASCHEWSKI, Oliver, 22339 Hamburg (DE); BLEIL, Julika, 22767 Hamburg (DE)
(74) Vertreter: Schicker, Silvia
(86) Internationale Anmeldenummer: PCT/EP2008/009945
(87) Internationale Veröffentlichungsnummer: WO 2009/083073

(56) Entgegenhaltungen:
- DE-A1-102005 045 130
- US-A- 6 131 851
- US-A1- 2006 237 583
- US-A1- 2007 090 786

## Beschreibung

Die vorliegende Erfindung betrifft ein Brennstoffzellensystemmodul zum Einsatz in einem Luftfahrzeug, ein Set von derartigen Brennstoffzellensystemmodulen sowie ein mit einem derartigen Brennstoffzellensystemmodul ausgestattetes Luftfahrzeug.

Brennstoffzellensysteme ermöglichen es, emissionsarm und mit einem hohen Wirkungsgrad elektrischen Strom zu erzeugen. Daher gibt es gegenwärtig auch im Flugzeugbau Bestrebungen, Brennstoffzellensysteme zur Erzeugung der an Bord eines Flugzeugs benötigten elektrischen Energie heranzuziehen. Beispielsweise ist es denkbar, die derzeit zur Bordstromversorgung eingesetzten, von den Haupttriebwerken angetriebenen Generatoren oder die Auxiliary Power Unit (APU) des Flugzeugs durch ein Brennstoffzellensystem zu ersetzen. Darüber hinaus könnte ein Brennstoffzellensystem auch zur Notstromversorgung des Flugzeugs verwendet werden und die bisher als Notstromaggregat eingesetzte Ram Air Turbine (RAT) ersetzen. Bei einem an Bord eines Flugzeugs eingesetzten Brennstoffzellensystem besteht jedoch das Problem, dass Wartungs- oder Reparaturarbeiten an dem Brennstoffzellensystem unter Umständen zu langen Stillstandzeiten des Flugzeugs führen können.

Die DE 10 2005 045 130 A1 welche den nächstliegenden bekannten Stand der Technik darstellt, beschreibt ein Wasser-Abwassermodul zur Entsorgung von Fäkalien und Abwässern sowie zur Bereitstellung von Frischwasser, das ein Brennstoffzellenmodul zur Erzeugung von Wasser und elektrischer Energie umfasst. Das Wasser-Abwassermodul ist so gestaltet, dass es in eine entsprechende Öffnung im Rumpf eines Flugzeugs eingesetzt werden kann.

Die US 2007/00907836 A1 beschreibt Brennstoffzellen zur Energieerzeugung für ein Flugzeug. Die Brennstoffzellen sind als dünne, zweidimensionale Schichten ausgebildet und auf die Außenhaut eines Flugzeugs aufgebracht.

Der Erfindung liegt die Aufgabe zugrunde, ein zum Einsatz in einem Luftfahrzeug, insbesondere einem Flugzeug geeignetes Brennstoffzellensystemmodul bereitzustellen, das es ermöglicht, Stillstandzeiten des Luftfahrzeugs aufgrund von Wartungs- oder Reparaturarbeiten an einem an Bord des Luftfahrzeugs vorgesehenen Brennstoffzellensystem zu minimieren und das sich überdies durch ein geringes Gewicht und einen geringen Einbauraumbedarf auszeichnet.

Zur Lösung dieser Aufgabe ist ein erfindungsgemäßes Brennstoffzellensystemmodul zum Einsatz in einem Luftfahrzeug, das mindestens eine Brennstoffzellensystemkomponente umfasst, modular, d.h. als Modul austauschbar, mit einem Rumpfabschnitt des Luftfahrzeugs verbindbar. Das erfindungsgemäße Brennstoffzellensystemmodul kann in einfacher, rascher und komfortabler Art und Weise an dem Rumpfabschnitt des Luftfahrzeugs montiert und, bei Bedarf, wieder von dem Rumpfabschnitt des Luftfahrzeugs gelöst werden. Zur Durchführung von Wartung- oder Reparaturarbeiten an der Brennstoffzellensystemkomponente des Brennstoffzellensystemmoduls kann das Brennstoffzellensystemmodul daher in einfacher Weise von dem Rumpfabschnitt des Luftfahrzeugs gelöst und durch ein anderes Brennstoffzellensystemmodul ersetzt werden. Dadurch können die Stillstandszeiten des mit dem erfindungsgemäßen Brennstoffzellensystemmodul ausgestatteten Luftfahrzeugs minimiert werden.

Das erfindungsgemäße Brennstoffzellensystemmodul umfasst eine Befestigungseinrichtung, die dazu eingerichtet ist, das Brennstoffzellensystemmodul lösbar an einem Spant der Luftfahrzeugstruktur zu befestigen. Beispielsweise kann die Befestigungseinrichtung des Brennstoffzellensystemmoduls dazu eingerichtet sein, eine Montage des Brennstoffzellensystemmoduls an einem im Heckbereich des Luftfahrzeugs angeordneten Spant der Luftfahrzeugstruktur zu ermöglichen.

Ein Gehäuseelement des erfindungsgemäßen Brennstoffzellensystemmoduls ist dazu eingerichtet, im mit dem Rumpfabschnitt des Luftfahrzeugs verbundenen Zustand des Brennstoffzellensystemmoduls einen Abschnitt der Außenhülle des Luftfahrzeugs zu bilden. Mit anderen Worten, das Gehäuseelement des Brennstoffzellensystemmoduls ist so gestaltet, dass es im an dem Rumpfabschnitt des Luftfahrzeugs montierten Zustand des Brennstoffzellensystemmoduls in die Außenhülle des Luftfahrzeugs integriert ist. Das zur Integration in die Außenhülle des Luftfahrzeugs vorgesehene Gehäuseelement ist vorzugsweise so geformt und weist eine derartige Oberfläche auf, dass die aerodynamischen Eigenschaften der Luftfahrzeugaußenhülle nicht beeinträchtigt werden. Durch die Integration des Gehäuseelements des erfindungsgemäßen Brennstoffzellensystemmoduls in die Außenhülle des mit dem erfindungsgemäßen Brennstoffzellensystemmoduls ausgestatteten Luftfahrzeugs kann auf ein zusätzliches, im Inneren des Luftfahrzeugs anzuordnendes Gehäuseelement verzichtet werden. Das erfindungsgemäße Brennstoffzellensystemmodul ermöglicht somit eine Optimierung des Gesamtsystemgewichts. Darüber hinaus erlaubt das Design des erfindungsgemäßen Brennstoffzellensystemmoduls eine optimale Ausnutzung des an Bord des Luftfahrzeugs vorhandenen Einbauraums.

Das Brennstoffzellensystemmodul ist in Form einer modular mit dem Rumpfabschnitt des Luftfahrzeugs verbindbaren Hecktüte ausgebildet. Eine Flugzeughecktüte stellt ein relativ gut zugängliches Element der Luftfahrzeugstruktur dar und kann daher besonders einfach als modular austauschbare Komponente ausgebildet werden.

Das erfindungsgemäße Brennstoffzellensystemmodul kann als Brennstoffzellensystemkomponente einen Brennstofftank, ein Brennstoffzellensystemgehäuse, Peripheriekomponenten des Brennstoffzellensystems und/oder eine Brennstoffzelle umfassen. Das erfindungsgemäße Brennstoffzellensystemmodul kann lediglich eine Brennstoffzellensystemkomponente, d.h. beispielsweise lediglich einen Brennstofftank umfassen. Alternativ dazu können jedoch auch mehrere Brennstoffzellensystemkomponenten, beispielsweise ein Brennstofftank und in einem Brennstoffzellensystemgehäuse aufgenommene Peripheriekomponenten des Brennstoffzellensystems oder eine Brennstoffzelle in das erfindungsgemäße Brennstoffzellensystemmodul integriert sein. Ferner ist auch die Integration eines kompletten Brennstoffzellensystems in das erfindungsgemäße Brennstoffzellensystemmodul denkbar.

Bei einer bevorzugten Ausführungsform des erfindungsgemäßen Brennstoffzellensystemmoduls wird das Gehäuseelement des Brennstoffzellensystemmoduls, das dazu eingerichtet ist, im mit dem Rumpfabschnitt des Luftfahrzeugs verbundenen Zustand des Brennstoffzellensystemmoduls einen Abschnitt der Außenhülle des Luftfahrzeugs zu bilden, zumindest abschnittsweise durch einen Abschnitt eines Brennstofftankgehäuses gebildet. Das Brennstofftankgehäuse dient der Aufnahme von der Brennstoffzelle des Brennstoffzellensystems im Betrieb zuzuführendem Brennstoff, d.h. vorzugsweise Wasserstoff in gasförmiger oder flüssiger Form. Die Speichertemperatur von flüssigem Wasserstoff beträgt ungefähr -253°C. Ein einen Abschnitt einer Luftfahrzeugaußenhülle bildender Abschnitt eines flüssigen Wasserstoff aufnehmenden Brennstofftankgehäuses muss daher nicht in aufwändiger Art und Weise isoliert werden, um im Flugbetrieb des Luftfahrzeugs ein Einfrieren des in dem Brennstofftankgehäuse aufgenommenen flüssigen Wasserstoffs zu verhindern.

Grundsätzlich kann das Brennstofftankgehäuse des erfindungsgemäßen Brennstoffzellensystemmoduls einschalig ausgeführt sein. Vorzugsweise weist das Brennstofftankgehäuse jedoch eine äußere Schale sowie eine in einem Abstand zu der äußeren Schale angeordnete innere Schale auf. Die äußere Schale und die innere Schale des Brennstofftankgehäuses können beispielsweise aus Aluminium oder Stahl bestehen. Bei einem zweischalig ausgebildeten Brennstofftankgehäuse ist die äußere Schale des Brennstofftankgehäuses zur Integration in die Außenhülle des mit dem erfindungsgemäßen Brennstoffzellensystemmodul ausgestatteten Luftfahrzeugs vorgesehen. Falls gewünscht, kann ein Raum zwischen der äußeren Schale und der inneren Schale des Brennstofftankgehäuses mit einem schlecht wärmeleitenden Material gefüllt sein. Eine derartige Isolationsschicht kann die innere Schale des Brennstofftankgehäuses sowie den in dem Brennstofftankgehäuse aufgenommenen Brennstoff gegenüber den unter Umständen stark schwankenden Temperaturen in der Umgebung des Luftfahrzeugs abschirmen.

Der Brennstofftank des erfindungsgemäßen Brennstoffzellensystemmoduls kann dazu eingerichtet sein, Wasserstoffgas unter erhöhtem Druck zu speichern. Ein in Form eines Druckspeichers ausgebildeter Brennstofftank weist beispielsweise ein Brennstofftankgehäuse mit einer mit Kohlefasern ummantelten Aluminiuminnenschale sowie einer äußeren Schale aus Kunststoff auf. Darüber hinaus ist ein als Wasserstoffgasdruckspeicher ausgebildeter Brennstofftank vorzugsweise mit entsprechenden Sicherheits- und Druckregelventilen zur Steuerung des Drucks im Inneren des Brennstofftanks ausgestattet. Bei einem in Form eines Wasserstoffgasdruckspeichers ausgebildeten Brennstofftank kann die Tatsache ausgenutzt werden, dass eine Luftfahrzeugaußenhülle üblicherweise eine aerodynamisch günstige abgerundete Form aufweist, die auch zur Realisierung eines Druckkörpers geeignet ist.

Das Gehäuseelement des erfindungsgemäßen Brennstoffzellensystemmoduls, das dazu eingerichtet ist, im mit dem Rumpfabschnitt des Luftfahrzeugs verbundenen Zustand des Brennstoffzellensystemmoduls einen Abschnitt der Außenhülle des Luftfahrzeugs zu bilden, kann zumindest abschnittsweise auch durch einen Abschnitt eines die Peripheriekomponenten des Brennstoffzellensystems und/oder die Brennstoffzelle aufnehmenden Brennstoffzellensystemgehäuses gebildet werden. Grundsätzlich können alle nicht dem Brennstofftankgehäuse zuzurechnenden Komponenten des Brennstoffzellensystems in dem Brennstoffzellensystemgehäuse aufgenommen sein. Bei einer besonders bevorzugten Ausführungsform des erfindungsgemäßen Brennstoffzellensystemmoduls ist ein Abschnitt der Luftfahrzeugaußenhülle durch einen Abschnitt eines Brennstofftankgehäuses und ein weiterer Abschnitt der Luftfahrzeugaußenhülle durch einen Abschnitt eines Brennstoffzellensystemgehäuses gebildet, in dessen Inneren weitere Komponenten des Brennstoffzellensystems, wie z.B. Peripheriekomponenten und/oder eine Brennstoffzelle angeordnet sind.

Das erfindungsgemäße Brennstoffzellensystemmodul kann dazu eingerichtet sein, beispielsweise im Bereich eines Belly Fairing des Luftfahrzeugs in die Luftfahrzeugstruktur integriert zu werden. Das Gehäuseelement des Brennstoffzellensystemmoduls bildet dann vorzugsweise einen Abschnitt der Luftfahrzeugaußenhülle im Bereich des Belly Fairing. Ferner ist eine Integration des erfindungsgemäßen Brennstoffzellensystemmoduls in ein Höhenleitwerk oder ein Seitenleitwerk eines Luftfahrzeugs denkbar. Das Gehäuseelement des Brennstoffzellensystemmoduls ist dann dazu eingerichtet, im in die Luftfahrzeugstruktur integrierten Zustand des Brennstoffzellensystemmoduls einen Abschnitt der Luftfahrzeugaußenhülle im Bereich des Höhenleitwerks oder des Seitenleitwerks zu bilden.

Im Airlinebetrieb wird ein Flugzeugtyp häufig mit sehr unterschiedlichen Missionen betrieben. Insbesondere Kurz- und Mittelstreckflugzeuge werden häufig für sehr viele kurze, d.h. deutlich unter der maximalen Reichweite der Flugzeuge liegende Flugstrecken und nur wenige im Bereich der maximalen Reichweite der Flugzeuge liegende Flugstrecken eingesetzt. In Abhängigkeit des Missionsprofils eines Flugzeugs kann daher die zum Betreiben eines Brennstoffzellensystems an Bord des Flugzeugs erforderliche Wasserstoffmenge während des Airlinebetriebs des Flugzeugs unter Umständen stark schwanken. Darüber hinaus besteht nicht an allen Flughäfen die Möglichkeit, Wasserstoff nachzutanken. Aufgrund dessen werden während des Airlinebetriebs eines Flugzeugs gegebenenfalls sehr unterschiedliche Anforderungen an die Kapazität eines Brennstofftanks zur Versorgung eines an Bord des Flugzeugs vorgesehenen Brennstoffzellensystems gestellt.

Ein erfindungsgemäßes Set von Brennstoffzellensystemmodulen zum Einsatz in einem Luftfahrzeug umfasst daher eine Mehrzahl von oben beschriebenen Brennstoffzellensystemmodulen, die mit Brennstofftanks mit unterschiedlichem Fassungsvermögen ausgestattet sind. Mit anderen Worten, in dem erfindungsgemäßen Brennstoffzellensystemmodulset umfasst ein erstes Brennstoffzellensystemmodul einen Brennstofftank mit einem bestimmten Fassungsvermögen. Ein weiteres Brennstoffzellensystemmodul oder weitere Brennstoffzellensystemmodule des erfindungsgemäßen Brennstoffzellensystemmodulsets umfasst/umfassen dagegen einen Brennstofftank mit einem vom Fassungsvermögen des Brennstofftanks des ersten Brennstoffzellensystemmoduls abweichenden Fassungsvermögen. Beispielsweise kann in einem erfindungsgemäßen Brennstoffzellensystemmodulset ein erstes Brennstoffzellensystemmodul einen Brennstofftank mit einem Fassungsvermögen von 500 I umfassen, während ein zweites Brennstoffzellensystemmodul einen Brennstofftank mit einem Fassungsvermögen von 1000 I umfasst und ein drittes Brennstoffzellensystemmodul mit einem Brennstofftank mit einem Fassungsvermögen von 1500 I ausgestattet ist.

Wenn das Luftfahrzeug auf einer unter seiner maximalen Reichweite liegenden Flugstrecke betrieben wird, kann ein Brennstoffzellensystemmodul zum Einsatz kommen, das einen Brennstofftank mit einem geringen Fassungsvermögen umfasst. Dadurch können im Flugbetrieb des Luftfahrzeugs Gewichts- und Treibstofferspamisse und/oder Payload-Kapazitätserweiterungen realisiert werden. Wenn das Luftfahrzeug dagegen auf im Bereich seiner maximalen Reichweite liegenden Flugstrecken betrieben wird oder Zielflughäfen ohne Wasserstoffversorgungsnetz anfliegt, kann das Luftfahrzeug modular mit einem Brennstoffzellensystemmodul verbunden werden, das einen Brennstofftank mit einem größeren Fassungsvermögen umfasst. Das erfindungsgemäße Brennstoffzellensystemmodulset ermöglicht somit in allen Betriebssituationen eines Luftfahrzeugs eine optimale Brennstoffversorgung des an Bord des Flugzeugs vorgesehenen Brennstoffzellensystems, erlaubt jedoch gleichzeitig einen besonders effizienten Flugbetrieb des Luftfahrzeugs.

Ein erfindungsgemäßes Luftfahrzeug umfasst ein oben beschriebenes Brennstoffzellensystemmodul.

Eine bevorzugte Ausführungsform eines erfindungsgemäßen Brennstoffzellensystemmoduls wird nun anhand der beigefügten schematischen Figuren näher erläutert, von denen
- Figur 1: ein in Form einer Flugzeughecktüte ausgebildetes Brennstoffzellensystemmodul zeigt, und
- Figur 2: die Montage des in Figur 1 dargestellten Brennstoffzellensystemmoduls an einem Flugzeug zeigt.

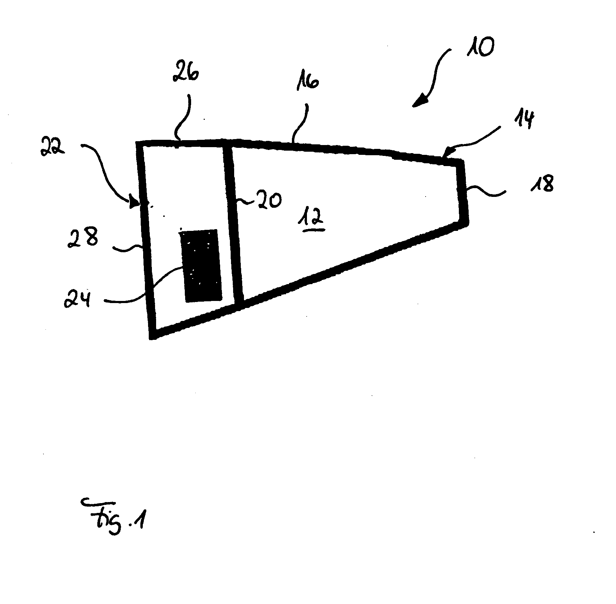

Ein in Figur 1 dargestelltes Brennstoffzellensystemmodul 10 ist in Form einer Flugzeughecktüte ausgebildet und umfasst einen Brennstofftank 12, der zur Speicherung von Wasserstoffgas unter erhöhtem Druck geeignet ist. Der Brennstofftank 12 weist ein Brennstofftankgehäuse 14 mit einer Mantelfläche 16, einer heckseitigen Begrenzungsfläche 18 sowie einer Trennfläche 20 auf. Das Brennstoffzellensystemmodul 10 umfasst ferner ein an das Brennstofftankgehäuse 14 angrenzendes Brennstoffzellensystemgehäuse 22, in dem Peripheriekomponenten sowie eine Brennstoffzelle 24 eines Brennstoffzellensystems aufgenommen sind. Das Brennstoffzellensystemgehäuse 22 umfasst eine Mantelfläche 26 sowie eine bugseitige Begrenzungsfläche 28.

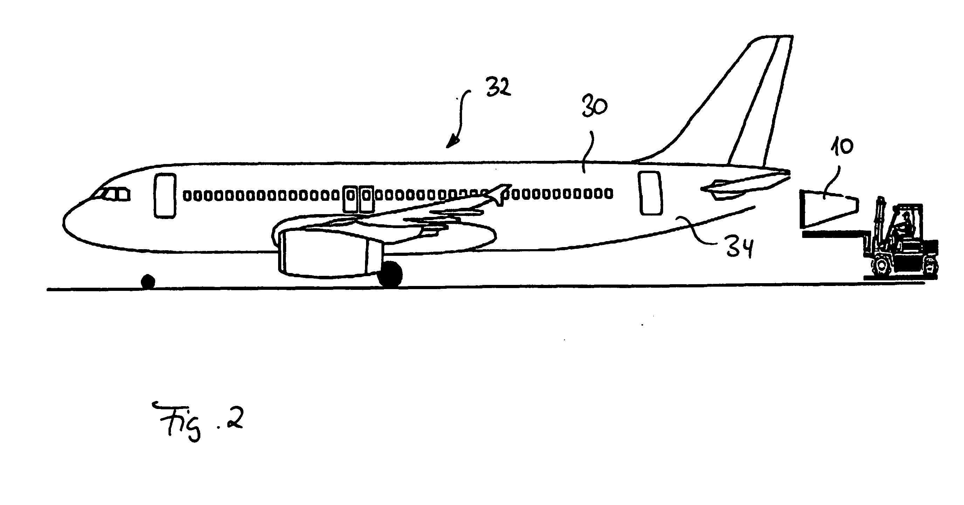

Im Bereich der bugseitigen Begrenzungsfläche 28 des Brennstoffzellensystemgehäuses 22 ist das Brennstoffzellensystemmodul 10 mit einer Befestigungseinrichtung versehen, die dazu eingerichtet ist, das Brennstoffzellensystemmodul 10, wie in Figur 2 gezeigt, modular mit einem Rumpfabschnitt 30 eines Flugzeugs 32 zu verbinden. Die Befestigungseinrichtung kann in Form einer Schraubverbindungseinrichtung oder einer Nietverbindungseinrichtung, aber auch als Klebeverbindungseinrichtung oder dergleichen ausgebildet sein. Insbesondere ist die Befestigungseinrichtung des Brennstoffzellensystemmoduls 10 dazu eingerichtet, das Brennstoffzellensystemmodul 10 lösbar an einem heckseitig letzten Spant einer Struktur des Flugzeugs 32 zu befestigen.

Im mit dem Rumpfabschnitt 30 des Flugzeugs 32 verbundenen Zustand des Brennstoffzellenmoduls 10 bilden die Mantelfläche 16 des Brennstofftankgehäuses 14 sowie die Mantelfläche 26 des Brennstoffzellensystemgehäuses 22 einen Abschnitt einer Außenhülle 34 des Flugzeugs. Das Brennstoffzellensystemmodul 10 kann folglich modular in die Rumpfstruktur des Flugzeugs 32 integriert werden.

Ein in den Figuren nicht gezeigtes Brennstoffzellensystemmodulset umfasst eine Mehrzahl von Brennstoffzellensystemmodulen 10. Die Brennstoffzellensystemmodule 10 weisen jeweils einen Brennstofftank 12 auf, wobei jedoch das Fassungsvermögen der Brennstofftanks 12 der einzelnen Brennstoffzellensystemmodule 10 jeweils unterschiedlich ist. Je nach Bedarf kann ein Brennstoffzellensystemmodul 10 des Brennstoffzellensystemmodulsets mit dem Rumpfabschnitt 30 des Flugzeugs 32 verbunden werden, dessen Brennstofftank 12 für eine vorgegebene Mission des Flugzeugs 32 ein optimales Fassungsvermögen aufweist.

## Patentansprüche

1. Brennstoffzellensystemmodul (10) zum Einsatz in einem Luftfahrzeug (32), das mindestens eine Brennstoffzellensystemkomponente umfasst,
**dadurch gekennzeichnet, dass** das Brennstoffzellensystemmodul (10) mittels einer Befestigungseinrichtung, die dazu eingerichtet ist, das Brennstoffzellensystemmodul (10) lösbar an einem Spant einer Luftfahrzeugstruktur zu befestigen, derart modular mit einem Rumpfabschnitt (30) des Luftfahrzeugs (32) verbindbar ist, dass ein Gehäuseelement des Brennstoffzellensystemmoduls (10) einen Abschnitt einer Außenhülle (34) des Luftfahrzeugs (32) bildet, wenn das Brennstoffzellensystemmodul (10) mit dem Rumpfabschnitt (30) des Luftfahrzeugs (32) verbunden ist, wobei das Brennstoffzellensystemmodul (10) in Form einer modular mit dem Rumpfabschnitt (30) des Luftfahrzeugs (32) verbindbaren Hecktüte ausgebildet ist.

2. Brennstoffzellensystemmodul nach Anspruch 1,
**dadurch gekennzeichnet, dass** das Brennstoffzellensystemmodul (10) einen Brennstofftank (12), ein Brennstoffzellensystemgehäuse (22), Peripheriekomponenten des Brennstoffzellensystems und/oder eine Brennstoffzelle (24) umfasst.

3. Brennstoffzellensystemmodul nach Anspruch 2,
**dadurch gekennzeichnet, dass** das Gehäuseelement des Brennstoffzellensystemmoduls (10), das dazu eingerichtet ist, im mit dem Rumpfabschnitt (30) des Luftfahrzeugs (32) verbundenen Zustand des Brennstoffzellensystemmoduls (10) einen Abschnitt der Außenhülle (34) des Luftfahrzeugs (32) zu bilden, zumindest abschnittsweise durch einen Abschnitt eines Brennstofftankgehäuses (14) gebildet wird.

4. Brennstoffzellensystemmodul nach Anspruch 3,
**dadurch gekennzeichnet, dass** das Brennstofftankgehäuse (14) eine äußere Schale sowie eine in einem Abstand zu der äußeren Schale angeordnete innere Schale umfasst, wobei ein Raum zwischen der äußeren Schale und der inneren Schale des Brennstofftankgehäuses (14) mit einem schlecht wärmeleitenden Material gefüllt ist.

5. Brennstoffzellensystemmodul nach einem der Ansprüche 2 bis 4,
**dadurch gekennzeichnet, dass** der Brennstofftank (12) dazu eingerichtet ist, Wasserstoffgas unter erhöhtem Druck zu speichern.

6. Brennstoffzellensystemmodul nach einem der Ansprüche 2 bis 5,
**dadurch gekennzeichnet, dass** das Gehäuseelement des Brennstoffzellensystemmoduls (10), das dazu eingerichtet ist, im mit dem Rumpfabschnitt (30) des Luftfahrzeugs (32) verbundenen Zustand des Brennstoffzellensystemmoduls (10) einen Abschnitt der Außenhülle (34) des Luftfahrzeugs (32) zu bilden, zumindest abschnittsweise durch einen Abschnitt eines die Peripheriekomponenten des Brennstoffzellensystems und/oder die Brennstoffzelle (24) aufnehmenden Brennstoffzellensystemgehäuses (22) gebildet wird.

7. Set von Brennstoffzellensystemmodulen (10) zum Einsatz in einem Luftfahrzeug (32), das eine Mehrzahl von Brennstoffzellensystemmodulen (10) nach einem der Ansprüche 1 bis 6 umfasst, wobei die Brennstoffzellensystemmodule (10) jeweils mit Brennstofftanks (12) mit unterschiedlichem Fassungsvermögen ausgestattet sind.

8. Verwendung eines Brennstoffzellensystemmoduls (10) nach einem der Ansprüche 1 bis 6 in einem Luftfahrzeug (32).

## Claims

1. Fuel cell system module (10) for use in an aircraft (32), which comprises at least one fuel cell system component,
**characterised in that** the fuel cell system module (10) is connectable, by means of a fastening device which is designed to fasten the fuel cell system module (10) releasably to a rib of an aircraft structure, modularly to a fuselage section (30) of the aircraft (32) in such a manner that a housing element of the fuel cell system module (10) forms a section of an outer skin (34) of the aircraft (32) when the fuel cell system module (10) is connected to the fuselage section (30) of the aircraft (32), wherein the fuel cell system module (10) is formed as a tail boom which is connectable modularly to the fuselage section (30) of the aircraft (32).

2. Fuel cell system module according to Claim 1,
**characterised in that** the fuel cell system module (10) comprises a fuel tank (12), a fuel cell system housing (22), peripheral components of the fuel cell system and/or a fuel cell (24).

3. Fuel cell system module according to Claim 2,
**characterised in that** the housing element of the fuel cell system module (10) which is designed to form a section of the outer skin (34) of the aircraft (32) when the fuel cell system module (10) is connected to the fuselage section (30) of the aircraft (32) is formed at least partly by a section of a fuel tank housing (14).

4. Fuel cell system module according to Claim 3,
**characterised in that** the fuel tank housing (14) comprises an outer shell and an inner shell spaced apart from the outer shell, a space between the outer shell and the inner shell of the fuel tank housing (14) being filled with a material of poor thermal conductivity.

5. Fuel cell system module according to any one of Claims 2 to 4,
**characterised in that** the fuel tank (12) is designed to store hydrogen gas under elevated pressure.

6. Fuel cell system module according to any one of Claims 2 to 5,
**characterised in that** the housing element of the fuel cell system module (10) which is designed to form a section of the outer skin (34) of the aircraft (32) when the fuel cell system module (10) is connected to the fuselage section (30) of the aircraft (32) is formed at least partly by a section of a fuel cell system housing (22) accommodating the peripheral components of the fuel cell system and/or the fuel cell (24).

7. Set of fuel cell system modules (10) for use in an aircraft (32), which comprises a plurality of fuel cell system modules (10) according to one of Claims 1 to 6, the fuel cell system modules (10) being equipped with fuel tanks (12) of different capacity.

8. Use of a fuel cell module (10) according to any one of Claims 1 to 6 in an aircraft (32).

## Revendications

1. Module de système de pile à combustible (10) conçu pour être utilisé dans un aéronef (32), lequel module comprend au moins un composant de système de pile à combustible,
**caractérisé en ce que** le module de système de pile à combustible (10) peut être raccordé de telle façon modulaire à une section de fuselage (30) de l'aéronef (32) au moyen d'un dispositif de fixation conçu pour fixer de manière détachable à un couple d'une structure d'aéronef le module de système de pile à combustible (10) qu'un élément boîtier du module de système de pile à combustible (10) forme une partie d'un revêtement extérieur (34) de l'aéronef (32) lorsque le module de système de pile à combustible (10) est raccordé à la section de fuselage (30) de l'aéronef (32), le module de système de pile à combustible (10) étant réalisé sous la forme d'un support d'empennage pouvant être raccordé de façon modulaire à la section de fuselage (30) de l'aéronef (32).

2. Module de système de pile à combustible (10) selon la revendication 1,
**caractérisé en ce que** le module de système de pile à combustible (10) comprend un réservoir à combustible (12), un boîtier de module de système de pile à combustible (22), des composants périphériques du système de pile à combustible et/ou une pile à combustible (24).

3. Module de système de pile à combustible (10) selon la revendication 2,
**caractérisé en ce que** l'élément boîtier du module de système de pile à combustible (10), qui est conçu de manière à former une partie d'un revêtement extérieur (34) de l'aéronef (32) lorsque le module de système de pile à combustible (10) est raccordé à la section de fuselage (30) de l'aéronef (32), est formé pour le moins partiellement par une partie d'un boîtier de réservoir à combustible (14).

4. Module de système de pile à combustible (10) selon la revendication 3,
**caractérisé en ce que** ledit boîtier de réservoir à combustible (14) comprend une coque extérieure et une coque intérieure disposée à distance de la coque extérieure, un espace entre la coque extérieure et la coque intérieure du boîtier de réservoir à combustible (14) étant rempli avec un matériau de mauvaise conductibilité thermique.

5. Module de système de pile à combustible (10) selon l'une des revendications 2 à 4,
**caractérisé en ce que** le réservoir à combustible (12) est conçu pour stocker le gaz d'hydrogène sous pression élevée.

6. Module de système de pile à combustible (10) selon l'une des revendications 2 à 5,
**caractérisé en ce que** l'élément boîtier du module de système de pile à combustible (10), qui est conçu de manière à former une partie d'un revêtement extérieur (34) de l'aéronef (32) lorsque le module de système de pile à combustible (10) est raccordé à la section de fuselage (30) de l'aéronef (32), est formé pour le moins partiellement par une partie d'un boîtier de système de pile à combustible (22) contenant les composants périphériques du système de pile à combustible et/ou la pile à combustible (24).

7. Set de modules de système de pile à combustible (10) conçu pour être utilisé dans un aéronef (32), lequel set comprend une pluralité de modules de système de pile à combustible (10) selon l'une des revendications 1 à 6, lesdits modules de système de pile à combustible (10) étant équipés chacun de réservoirs à combustible (12) de contenance différente.

8. Utilisation d'un module de système de pile à combustible (10) selon l'une des revendications 1 à 6 dans un aéronef (32).
